Europäisches Patentamt

European Patent Office

Office européen des brevets

(11) Veröffentlichungsnummer: **0 228 659**
**B1**

# (12) EUROPÄISCHE PATENTSCHRIFT

(45) Veröffentlichungstag der Patentschrift:
**11.07.90**

(21) Anmeldenummer: **86117598.2**

(22) Anmeldetag: **17.12.86**

(51) Int. Cl.⁵: **B25B 7/00, B25G 1/10**

(54) Handschere für schwere Arbeiten.

(30) Priorität: **21.12.85 DE 3545757**

(43) Veröffentlichungstag der Anmeldung:
**15.07.87 Patentblatt 87/29**

(45) Bekanntmachung des Hinweises auf die Patenterteilung:
**11.07.90 Patentblatt 90/28**

(84) Benannte Vertragsstaaten:
**AT BE CH DE ES FR GB GR IT LI LU NL SE**

(56) Entgegenhaltungen:
**CH-A- 416 370**
**DE-A- 2 904 913**
**DE-B- 2 041 746**
**FR-A- 2 255 009**
**GB-A- 1 089 225**
**GB-A- 1 562 010**
**GB-A- 2 160 140**
**US-A- 2 442 424**
**US-A- 2 604 695**
**US-A- 3 861 038**
**US-A- 4 502 222**

(73) Patentinhaber: **SWG Schraubenwerk Gaisbach GmbH & Co. KG, Am Bahnhof 50, D-7112 Waldenburg(DE)**

(72) Erfinder: **Kern, Peter, Gustav-Siegle-Strasse 72, D-7000 Stuttgart 1(DE)**
Erfinder: **Bayer, Gerhard, Rotebühlstrasse 176, D-7000 Stuttgart 1(DE)**
Erfinder: **Solf, Johannes, Hermelinweg 37, D-7032 Sindelfingen(DE)**

(74) Vertreter: **Patentanwälte Ruff und Beier, Neckarstrasse 50, D-7000 Stuttgart 1(DE)**

## Beschreibung

Die Erfindung betrifft eine Handschere für schwere Arbeiten, mit zwei schwenkbar gelagerten Griffschenkeln, die mit zwei Scherenschneiden in Wirkverbindung stehen, wobei in Breitseitenansicht gesehen der Widerlager-Griffschenkel konvex und der Fingergriffschenkel konkav gewölbt ist.

Im Gegensatz zu üblichen Haushaltsscheren, mit denen Papier geschnitten werden soll, muß bei Scheren für schwere Arbeiten während des Schneidens relativ viel Kraft aufgebracht werden. Scheren dieser Art sind insbesondere Blechscheren und Rebscheren. Handblechscheren werden zum Trennen von Blechen benutzt. Da die Schneidvorgänge eine dynamische Betätigung des Arbeitsmittels erfordern, ist die Schere üblicherweise mit einer Feder ausgestattet, die das selbsttätige Öffnen der Blechschere in ihre Ausgangsstellung erreicht.

Die Länge der Griffschenkel ermöglicht relativ große Kraftübertragungen, die je nach Blechdicke oder Astdicke erforderlich sein können.

Es ist bereits eine Blechschere bekannt (DE-B-20 41 746), bei der der der Handinnenseite zugeordnete Widerlager-Griffschenkel bzgl. der Längsachse der Blechschere konvex und der den Fingergliedern zugeordnete Fingergriffschenkel bzgl. der Längsachse der Blechschere in seinem Endbereich konkav gewölbt ist. Die Gestaltung der von den Griffschenkeln gebildeten Handseite ist jedoch nur unzureichend auf die Gegebenheiten der menschlichen Hand abgestellt. Eine Sicherung gegen Abgleiten der Hand in Richtung der Wirkteile der Schere ist nicht gegeben.

Bei einer weiteren bekannten Blechschere (US-A-45 02 222) sind die Außenkonturen der Griffschenkel in ihrem Griffbereich beide konvex ausgebildet, so daß sich die Griffschenkel etwa elliptisch bzw. oval gegenüberstehen. Diese Handgriffe haben auch Abgleitnoppen, die ein Abgleiten der Hand in Richtung auf das Schneidwerkzeug verhindern sollen. Diese beideitig konvex gewölbte Form der Griffschenkel ist jedoch bei Scheren keineswegs günstig, da bei Scheren keine Haltearbeit geleistet wird, sondern während des gesamten Schwenkvorganges eine relativ hohe Kraft aufgebracht werden muß.

Der Erfindung liegt die Aufgabe zugrunde, eine Handschere für schwere Arbeiten zu schaffen, bei der große Kräfte ohne Ermüdung auch bei längerem Gebrauch übertragen werden können und bei der keine Gefahr des Abgleitens besteht. Insbesondere soll die Handseite optimal an die Anatomie und Anthropometrie der menschlichen Hand unter den Bedingungen einer Kraftschere angepaßt sein.

Zur Lösung dieser Aufgabe ist erfindungsgemäß vorgesehen, daß bei der Handschere gemäß Oberbegriff des Anspruchs 1 der Fingergriffschenkel in Schmalseitenansicht gesehen in einem seitlich in Richtung auf die am Handballen liegenden Fingerglieder der Greifhand von der Geraden abgebogenen Bereich endet. Durch diese Ausbildung wird erreicht, daß auch bei offener Schere der Fingergriffschenkel bzgl. der Fingerglieder günstig angeordnet ist, so daß in jeder Stellung der Schenkel der Schere von der geöffneten bis zur geschlossenen Stellung eine gute Krafteinleitung möglich ist. Zwar ist die Schere nicht mehr für Rechtshänder und Linkshänder gleichermaßen zu verwenden, da die seitliche Abbiegung jeweils in Richtung auf die Fingerglieder der Greifhand gegeben sein muß. Dieser geringe Nachteil wird jedoch durch die erzielten Vorteile bei weitem ausgeglichen.

In Weiterbildung kann vorgesehen sein, daß die Krümmungsradien des Widerlager-Griffschenkels und des Fingergriffschenkels in Längs- und Querrichtung zwischen etwa 200 und etwa 250 mm liegen. Dies hat sich als eine besonders günstige Dimensionierung herausgestellt.

Es kann erfindungsgemäß vorgesehen sein, daß die dem Handteller zugewandte Seitenflanke und die Schmalseite des Widerlagergriffs eine der Form der Innenseite der Greifhand entsprechende Formgebung aufweisen.

Um eine weiter verbesserte Anpassung der Schere im Bereich ihrer Handseite an die menschliche Hand zu schaffen, kann erfindungsgemäß vorgesehen sein, daß der Widerlager-Griffschenkel auf seiner dem Handteller zugewandten Seite eine seitliche, ggf. vergrößerte Anlagefläche aufweist. Mit Hilfe dieser Anlagefläche liegt der Widerlager-Griffschenkel an der Handinnenseite an, so daß hier eine relativ große Anlagefläche gegeben ist, die zu verringerten Drücken führt. Dadurch wird nicht nur die Belastung der Hand herabgesetzt, sondern auch eine sichere Führung des Werkzeugs ermöglicht.

In weiterer Ausgestaltung kann vorgesehen sein, daß in Schmalseitenansicht die dem Handteller zugewandte Seitenflanke des Widerlager-Griffschenkels konvex gewölbt ist.

Es kann vorgesehen sein, daß ein Querschnitt durch den Widerlager-Griffschenkel in dessen Griffbereich unsymmetrisch ausgebildet ist, so daß der Übergang zwischen der Schmalseite und der dem Handteller zugewandten Seitenflanke flacher abgerundet verläuft als der Übergang zwischen der Schmalseite und der dem Handteller abgewandten Seitenflanke.

Das Abgleiten der Hand vom Griffbereich in Richtung auf die Schneidteile der Schere oder in Richtung auf das zu schneidende Blech wird schon durch die Ausbildung der Form der Griffschenkel verhindert. Es kann jedoch in weiterer Ausgestaltung zur Verbesserung des Abgleitschutzes vorgesehen sein, daß am Widerlager-Griffschenkel zur Abstützung der Hand ein Abgleitnoppen angeordnet ist, der vorzugsweise vom freien Ende des Griffschenkels einen Abstand aufweist, der im Bereich von etwa 90 bis etwa 110 mm liegt.

Der Abgleitnoppen an dem Widerlager-Griffschenkel ist mit Vorteil sowohl in der Schmalseite als auch in der dem Handteller zugewandten Seitenflanke des Widerlager-Griffschenkels vorhanden. Dagegen ist die dem Handteller abgewandte Seitenflanke des Widerlager-Griffschenkels mit Vorteil frei von einem Abgleitnoppen. In der dem Handteller zugewandten Seitenflanke kann unmittelbar benachbart zu dem Abgleitnoppen eine Einschnürung vorhanden sein, in der die Greifhand im Bereich zwischen Daumen und Zeigefinger anliegt.

Auch an dem Fingergriffschenkel kann ein Abgleitnoppen angeordnet sein, der vorzugsweise derart angeordnet ist, daß er zwischen dem Zeigefinger und dem Mittelfinger der Greifhand liegt. Er dient damit nicht nur als Abgleitschutz, sondern auch zur verbesserten Anlage des Zeigefingers. Der Abstand dieses Noppens vom freien Ende des zugehörigen Griffschenkels liegt vorzugsweise im Bereich von 70 bis etwa 95 mm.

Da bei Betätigung der Blechschere der Fingergriffschenkel periodisch mit dem Schneidvorgang von den Fingerendgliedern bis zu den Fingermittelgliedern gleitet, kann erfindungsgemäß in Weiterbildung vorgesehen sein, daß der Reibbeiwert der Oberfläche des Fingergriffschenkels verringert ist, während der Reibbeiwert der Oberfläche des Widerlager-Griffschenkels, insbesondere im Bereich von dessen Anlagefläche an der Handinnenseite, vergrößert ist. Damit wird die sichere Führung der Schere an der Handinnenseite und gleichzeitig das Gleiten der Finger über den Fingergriffschenkel verbessert.

Weitere Vorzüge der Erfindung ergeben sich aus der folgenden Beschreibung einer bevorzugten Ausführungsform, die am Beispiel einer Blechschere dargestellt ist, sowie anhand der Zeichnung. Hierbei zeigen:

Fig. 1 eine Breitseitenansicht einer erfindungsgemäß ausgestalteten Blechschere;

Fig. 2 die Breitseitenansicht von der entgegengesetzten Seite;

Fig. 3 eine Schmalseitenansicht auf die Fingergriffseite, d.h. von links in Fig. 1;

Fig. 4 eine Schmalseitenansicht auf die Blechschere von der Widerlager-Griffseite, d.h. von rechts in Fig. 1;

Fig. 5 eine Ansicht der Schere schräg von unten in Fig. 1;

Fig. 6 einen Schnitt durch den Widerlager-Griffschenkel etwa längs Linie VI-VI in Fig. 4.

Die Erfindung ist in der Zeichnung anhand einer Blechschere dargestellt. Die Griffschenkelausbildung hat jedoch Gültigkeit bei all denjenigen Scheren, bei denen relativ große Kräfte aufgewandt werden müssen. Hierfür in Frage kommen unter anderem außerdem Rebscheren sowie Scheren zum Schneiden von Teppichböden.

Die dargestellte Blechschere enthält zwei Griffschenkel 11, 12, die miteinander in ihrem vorderen Bereich mit Hilfe eines Schwenkgelenks 13 verbunden sind. Im Bereich ihrer von dem Schwenkgelenk 13 abgewandten Enden sind die Griffschenkel 11, 12 zum Angreifen durch die Hand eines Benutzers ausgebildet. In diesem Griffbereich sind die Griffschenkel 11, 12 beispielsweise mit Hilfe einer aus Kunststoff bestehenden Umkleidung versehen.

An den Griffschenkeln 11, 12 sind im Bereich zwischen den Griffbereichen und dem Schwenkgelenk 13 mit Hilfe zweier Zapfen 14 zwei Untersetzungshebel 15, 16 angelenkt, die ihrerseits wieder mit Hilfe eines durch eine Schraube gebildeten Schwenkgelenks 17 miteinander verbunden sind, wobei die beiden durch die Schwenkgelenke 13 und 17 gebildeten Schwenkachsen parallel zueinander verlaufen. Die Untersetzungshebel 15, 16 bilden an ihren den Zapfen 14 gegenüberliegenden Enden jenseits des Schwenkgelenks 17 die Schneidbacken 18, 19. Die Schneidbacken 18, 19 sind bzgl. der Längsrichtung der Blechschere abgewinkelt.

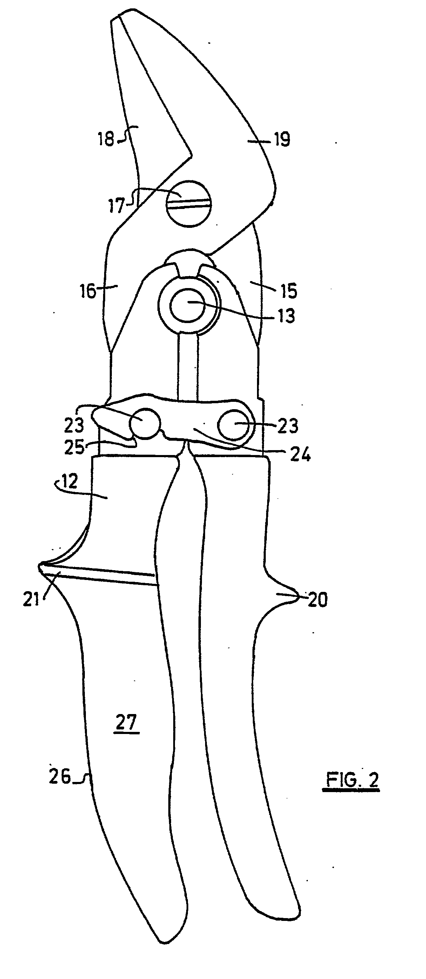

In dem Schwenkgelenk 13, das die beiden Griffschenkel 11, 12 miteinander verbindet, ist eine Feder angeordnet, die die beiden Griffschenkel 11, 12 zu spreizen versucht, so daß die Schere durch die Feder in Öffnungsstellung beaufschlagt wird. Um die Feder geschlossen zu halten, ist eine in Fig. 2 sichtbare Sperre vorhanden.

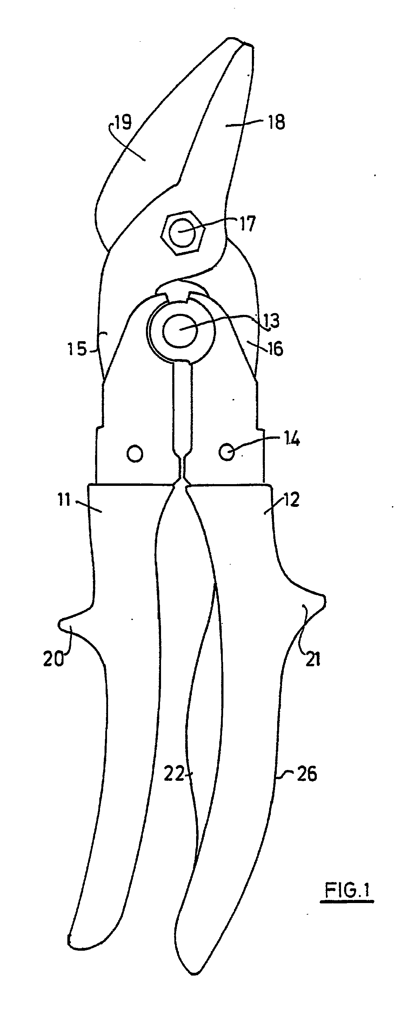

Verlängert man die Trennlinie der beiden Schneidbacken 18, 19 in Richtung der Griffschenkel, so bildet der am weitesten von dieser Linie entfernt angeordnete Griffschenkel 12 den Widerlager-Griffschenkel, während der näher an der Linie angeordnete Griffschenkel 11 der Fingergriffschenkel ist. Die Schere wird so gefaßt, daß der Widerlager-Griffschenkel an der Handinnenseite anliegt, während sich die Fingerglieder mit Ausnahme des Daumens an den Fingergriffschenkel 11 anlegen. Die dargestellte Schere ist für einen Rechtshänder gedacht. Der Griffbereich des Widerlager-Griffschenkels 12 ist bzgl. der Längsachse der Blechschere konvex gebogen, während der gegenüberliegende Fingergriffschenkel 11 mit etwa gleichem Krümmungsradius bzgl. der Längsachse konkav gebogen ist. Beide Griffschenkel 11, 12 verlaufen daher im Griffbereich in der Breitseitenansicht der Fig. 1 etwa parallel zueinander. Der Fingergriffschenkel 11 weist einen Abgleitnoppen 20 auf, der vom freien Ende des Fingergriffschenkels 11 einen derartigen Abstand aufweist, daß er zwischen Zeigefinger und Mittelfinger der Greifhand zu liegen kommt.

Der gegenüberliegende Widerlager-Griffschenkel weist in seinem Griffbereich ebenfalls einen nach außen gerichteten Abgleitnoppen 21 auf, dessen Abstand vom freien Ende des Griffschenkels etwas größer ist als der Abstand des ersten Abgleitnoppens 20. Der Widerlager-Griffschenkel 12 weist auf seiner in Fig. 1 hinteren Seite, d.h. derjenigen Seite, die zum Inneren des Handtellers gerichtet ist, eine Vergrößerung 22 auf, die auf ihrer Außenseite eine Anlagefläche zur Anlage am Handteller der Greifhand bestimmt ist.

Fig. 2 zeigt die Blechschere von der gegenüberliegenden Seite. Die beiden Zapfen 14 weisen auf dieser Seite einen vergrößerten Kopf 23 auf, so daß an dem einen Zapfen 14 eine schwenkbare Sperre 24 angelenkt ist, die derart verschwenkt werden kann, daß sie mit einer Ausnehmung 25 um den zweiten Zapfen 14 herumgreift.

Der Abgleitnoppen 20 des Fingergriffschenkels erstreckt sich im wesentlichen nur in der Außenkontur des Fingergriffschenkels, also nicht in den Seitenflanken 28, die in Fig. 1 und Fig. 2 in der Zeichnungsebene liegen.

Dagegen setzt sich der Abgleitnoppen 21 des Widerlager-Griffschenkels 12 von der Schmalseite 26 der Schere, siehe Fig. 1 und 2, auch in diejenige Seitenflanke des Widerlager-Griffschenkels fort, die zur Anlage an der Handinnenseite bestimmt ist.

Der Übergang zwischen der Schmalseite 26 des Widerlager-Griffschenkels 12 und dem zugehörigen Abgleitnoppen 21 ist derart geschwungen ausgeführt, daß hier der Bereich zwischen Daumen und Zeigefinger vollflächig an dem Widerlager-Griffschenkel anliegen kann. Die in Fig. 2 zu sehende Seitenflanke 27 des Widerlager-Griffschenkels ist deutlich größer als die gegenüberliegende Seitenflanke 28, siehe Fig. 1, was durch die seitliche Vergrößerung 22 erreicht wird. Hierdurch wird eine relativ große Anlagefläche geschaffen, an der der Widerlager-Griffschenkel am Handteller anliegen kann.

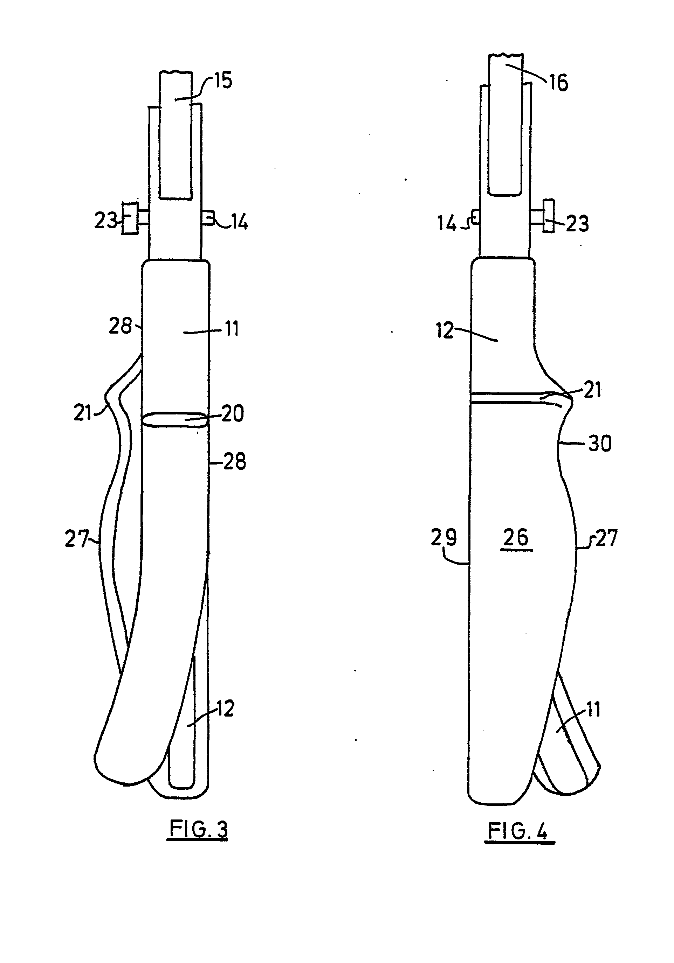

Fig. 3 zeigt eine Schmalseitenansicht der Schere von links in Fig. 1 und von rechts in Fig. 2. Der Abgleitnoppen 20 erstreckt sich im wesentlichen nicht über die Breite des Fingergriffschenkels 11 hinaus. Dies bedeutet, daß beide Seitenflanken 28 im wesentlichen glatt verlaufen. Der Fingergriffschenkel 11 verläuft zu seinem freien Ende hin abgebogen, wobei der gebogene Bereich kurz hinter dem Abgleitnoppen 20 beginnt. Der Krümmungsradius dieses abgebogenen Bereiches liegt zwischen etwa 20 und etwa 25 cm. Die Breite des Fingergriffschenkels 11 in der Schmalseitenansicht, d.h. der Abstand ihrer beiden Seitenflanken 28, ist über die gesamte Länge des Fingergriffschenkels 11 im wesentlichen konstant.

Die Form des Widerlager-Griffschenkels geht aus der Fig. 4 am besten hervor. In dieser Schmalseitenansicht ist die Seitenflanke 27, die dem Handteller zugeordnet ist, nach außen konvex gewölbt, so daß der Abstand der Handteller-Seitenflanke 27 von der gegenüberliegenden Seitenflanke 29 vom Endbereich des Griffs zunächst zunimmt, und über einen breitesten Bereich wieder schmaler wird, und von dort zu dem Abgleitnoppen 21 wieder zunimmt. In diese so gebildete Einschnürung 30 kann sich der Handbereich zwischen Daumen und Zeigefinger einschmiegen. Die Seitenflanke 27 bildet eine in allen Richtungen abgerundete Anlagefläche an dem Handteller. Die gegenüberliegende Seitenflanke 29 verläuft dagegen im wesentlichen eben bzw. geradlinig, da die Blechschere im wesentlichen nur im Bereich der gegenüberliegenden Seitenflanke und im Bereich der Außenkontur 26 an der Hand anliegt.

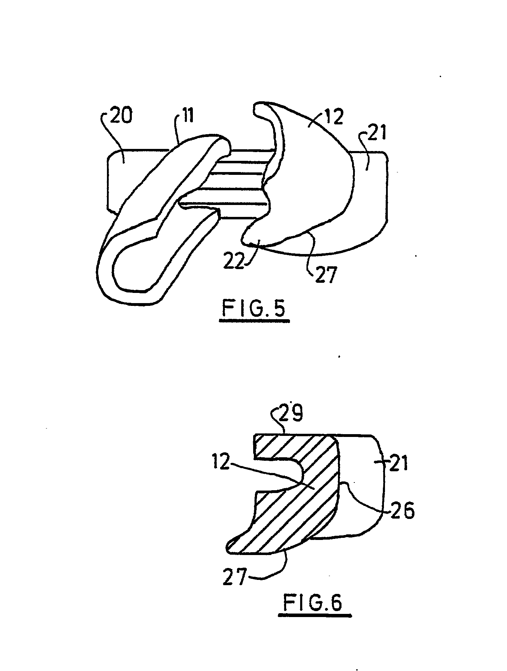

Fig. 5 zeigt eine Ansicht der Schere schräg von unten in Fig. 1. Es ist daher deutlich zu sehen, daß der Widerlager-Griffschenkel 12 an seiner Außenseite abgerundet verläuft und eine vergrößerte Anlagefläche 22 für die Handinnenseite bildet. Der Abgleitnoppen 21 ist im wesentlichen nur im Bereich der Außenkontur und der Handteller-Seitenflanke 27 vorhanden.

Bei dem Schnitt der Fig. 6 ist zu sehen, daß der Übergang zwischen der Schmalseite 26 und der Handteller-Seitenflanke 27 des Widerlager-Griffschenkels 12 kontinuierlich abgerundet verläuft und die Handteller-Seitenflanke 27 seitlich weit heruntergezogen ist, um eine möglichst große Anlagefläche am Handteller zu schaffen.

Die dargestellte Blechschere ist für einen Rechtshänder bestimmt. In der Schmalseitenansicht der Fig. 4 ist der Fingergriffschenkel für die rechte Hand nach rechts abgebogen. Bei einer Blechschere für Linkshänder müßte die Ausbildung der Griffschenkel in ihrem Griffbereich spiegelbildlich bzgl. der Schmalseitenansichten der Fig. 3 und Fig. 4 ausgebildet sein.

Bei Anwendung der Erfindung bei einer Rebschere würde die Maulseite der Schere anders ausgebildet sein, nicht jedoch die Griffseite der Schere.

Für die sichere Handhabung der Blechschere ist besonders die Lage des Griffes im Handwurzelbereich von Bedeutung. Durch die vorgeschlagenen Maßnahmen wird eine Anpassung der Griffschenkel an die natürliche Greifhaltung der Hand und der von dieser vorgegebenen Wölbungen erreicht. Bei Betätigung der Blechschere liegt der Widerlager-Griffschenkel 12 fest an der Handinnenseite an, während der Fingergriffschenkel 11 periodisch mit dem Schneidvorgang von den Fingerend- bis an den Fingermittelgliedern gleitet. Durch die einseitige zum Handteller gerichtete Anlagefläche, die gemäß der Anatomie der Hand an dieser Stelle gestaltet ist, wird erreicht, daß die Reibung zwischen Griff und Hand erhöht und somit eine sichere Führung des Werkzeugs möglich wird.

Als Griffoberflächenmaterial wird vorzugsweise Kunststoff verwendet. Aufgrund der verschiedenen Koppelungsbedingungen ist es von besonderem Vorteil, wenn das Fingergriffschenkelmaterial einen geringeren Reibbeiwert besitzt als das Material des Widerlager-Griffschenkels. Auf diese Weise wird der Gleitvorgang der Finger unterstützt und der Widerlager-Griffschenkel liegt fester an der Hand.

## Patentansprüche

1. Handschere für schwere Arbeiten, mit zwei schwenkbar gelagerten Griffschenkeln (11, 12), die mit zwei Schneidbacken (18, 19) in Wirkverbindung stehen, wobei in Breitseitenansicht der Schere gesehen der Widerlager-Griffschenkel (12) konvex und der Fingergriffschenkel (11) konkav gewölbt ist, dadurch gekennzeichnet, daß der Fingergriffschenkel (11) in Schmalseitenansicht gesehen in einem seitlich in Richtung auf die am Handballen liegenden Fingerglieder der Greifhand von der Geraden abgebogenen Bereich endet.

2. Schere nach Anspruch 1, dadurch gekennzeichnet, daß die Krümmungsradien des Widerlager-Griffschenkels (12) und des Fingergriffschenkels (11) in Längs- und/oder Querrichtung zwischen etwa 200 und etwa 250 mm betragen.

3. Schere nach Anspruch 1 oder 2, dadurch gekennzeichnet, daß die dem Handteller zugewandte Seitenflanke (27) und die Schmalseite (26) des Widerlager-Griffschenkels (12) eine der Form der Innenseite der Greifhand entsprechende Formgebung aufweisen.

4. Schere nach einem der vorhergehenden Ansprüche, dadurch gekennzeichnet, daß die dem Handteller zugewandte Seitenflanke (27) des Widerlager-Griffschenkels (12) vergrößert ausgebildet ist und eine Anlagefläche für das Innere der Greifhand bildet.

5. Schere nach einem der vorhergehenden Ansprüche, dadurch gekennzeichnet, daß in Schmalseitenansicht die dem Handteller zugewandte Seitenflanke (27) des Widerlager-Griffschenkels (12) konvex gewölbt ist.

6. Schere nach einem der vorhergehenden Ansprüche, dadurch gekennzeichnet, daß ein Querschnitt durch den Widerlager-Griffschenkel (12) in dessen Griffbereich unsymmetrisch ausgebildet ist und der Übergang zwischen der Schmalseite (26) und der dem Handteller zugewandten Seitenflanke (27) flacher abgerundet verläuft.

7. Handschere nach einem der vorhergehenden Ansprüche, dadurch gekennzeichnet, daß am Widerlager-Griffschenkel ein Abgleitnoppen (21) vorzugsweise in einem Abstand von etwa 90 bis etwa 110 mm vom Ende des Widerlager-Griffschenkels (21) angeordnet ist.

8. Handschere nach Anspruch 7, dadurch gekennzeichnet, daß der Abgleitnoppen (21) in der Schmalseite (26) und der dem Handteller zugewandten Seitenflanke (27) ausgebildet ist.

9. Handschere nach einem der vorhergehenden Ansprüche, dadurch gekennzeichnet, daß in Schmalseitenansicht die dem Handteller zugewandte Seitenflanke (27) benachbart zu dem Abgleitnoppen (21) eine Einschnürung (30) aufweist.

10. Handschere nach einem der vorhergehenden Ansprüche, dadurch gekennzeichnet, daß am Fingergriffschenkel (11) ein Abgleitnoppen (20) derart angeordnet ist, daß er zwischen Zeigefinger und Mittelfinger der Greifhand zu liegen kommt, wobei vorzugsweise sein Abstand vom Ende des Fingergriffschenkels (11) im Bereich von etwa 70 bis etwa 95 mm liegt.

11. Handschere nach einem der vorhergehenden Ansprüche, dadurch gekennzeichnet, daß der Reibbeiwert der Oberfläche des Fingergriffschenkels (11) kleiner ist als der Reibbeiwert der Oberfläche des Widerlager-Griffschenkels (12).

## Claims

1. Heavy-duty hand shears with two pivotably mounted grip legs (11, 12), which are operatively connected to two cutting blades (18, 19) and, in wide side view of the shears, the abutment grip leg (12) is convex and the finger grip leg (11) concave, characterized in that, considered in narrow side view, the finger grip leg (11) terminates in an area bent laterally from a straight line in the direction of the phalanxes of the gripping hand located on the ball of the thumb.

2. Shears according to claim 1, characterized in that the radii of curvature of the abutment grip leg (12) and the finger grip leg (11) in the longitudinal and/or transverse direction are between approximately 200 and approximately 250 mm.

3. Shears according to claims 1 or 2, characterized in that the lateral flank (27) facing the hand surface and the narrow side (26) of the abutment grip leg (12) have a shape corresponding to that of the inside of the gripping hand.

4. Shears according to one of the preceding claims, characterized in that the lateral flank (27) of the abutment grip leg (12) facing the hand surface is enlarged and forms a bearing surface for the inside of the gripping hand.

5. Shears according to one of the preceding claims, characterized in that, in narrow side view, the lateral flank (27) of the abutment grip leg (12) facing the hand surface is convex.

6. Shears according to one of the preceding claims, characterized in that a cross-section through the abutment grip leg (12) in its gripping area is asymmetrical and the transition between the narrow side (26) and the lateral flank (27) facing the hand surface is rounded in a more shallow manner.

7. Hand shears according to one of the preceding claims, characterized in that on the abutment grip leg is provided a slip-preventing projection (21), preferably at a distance of approximately 90 to approximately 110 mm from the end of the abutment grip leg (21).

8. Hand shears according to claim 7, characterized in that the slip-preventing projection (21) is formed in the narrow side (26) and the lateral flank (27) facing the hand surface.

9. Hand shears according to one of the preceding claims, characterized in that, in narrow side view, the lateral flank (27) facing the hand surface has a constriction (30) adjacent to the slip-preventing projection (21).

10. Hand shears according to one of the preceding claims, characterized in that a slip-preventing projection (20) is arranged on the finger grip leg (11) in such a way that it comes to rest between the index finger and the middle finger of the gripping hand and its distance from the end of the finger grip leg (11) is preferably in the range approximately 70 to approximately 95 mm.

11. Hand shears according to one of the preceding claims, characterized in that the friction coefficient of the surface of the finger grip leg (11) is smaller than the friction coefficient of the surface of the abutment grip leg (12).

## Revendications

1. Cisaille à main pour travaux lourds, avec deux branches à poignée (11, 12) montées à pivot qui sont en liaison fonctionnelle avec deux tranchants (18, 19) tandis que, lorsqu'on voit la cisaille par son côté plat, la branche à poignée de butée (12) présente une incurvation convexe et la branche à poignée des doigts (11) une incurvation concave, caractérisée en ce que la branche à poignée des doigts (11), vue de son côté étroit, se termine dans une zone incurvée latéralement par rapport à la droite en direction des phalanges de doigts de la main de préhension appuyant sur la paume de la main.

2. Cisaille selon la revendication 1, caractérisée en ce que les rayons de courbure de la branche à poignée de butée (12) et de la branche à poignée des doigts (11) sont compris entre environ 200 et environ 250 mm en direction longitudinale et/ou transversale.

3. Cisaille selon la revendication 1 ou 2, caractérisée en ce que le flanc latéral (27) tourné vers la paume de la main et le côté étroit (26) de la branche à poignée de butée (12) présentent une forme correspondant à la forme du côté intérieur de la main de préhension.

4. Cisaille selon l'une des revendications précédentes, caractérisée en ce que le flanc latéral (27) de la branche à poignée de butée (12) tourné vers la paume de la main est agrandi et constitue une surface d'appui pour l'intérieur de la main de préhension.

5. Cisaille selon l'une des revendications précédentes, caractérisé en ce que, dans la vue du côté étroit, le flanc latéral (27) de la branche à poignée de butée (12) tourné vers la paume de la main présente une courbure convexe.

6. Cisaille selon l'une des revendications précédentes, caractérisée en ce qu'une section dans la branche à poignée de butée (12) est dissymétrique dans la zone de préhension de celle-ci et que la transition entre le côté étroit (26) et le flanc latéral (27) tourné vers la paume de la main présente un arrondi plus plat.

7. Cisaille à main selon l'une des revendications précédentes, caractérisée en ce qu'un bouton contre le glissement (21) est disposé sur la branche à poignée de butée, de préférence à une distance d'environ 90 à environ 110 mm par rapport à l'extrémité de la branche à poignée de butée (21).

8. Cisaille à main selon la revendication 7, caractérisée en ce que le bouton contre le glissement (21) est disposé dans le côté étroit (26) et dans le flanc latéral (27) tourné vers la paume de la main.

9. Cisaille à main selon l'une des revendications précédentes, caractérisée en ce que, dans la vue du côté étroit, le flanc latéral (27) tourné vers la paume de la main présente un rétrécissement (30) à proximité du bouton contre le glissement (21).

10. Cisaille à main selon l'une des revendications précédentes, caractérisée en ce qu'un bouton contre le glissement (20) est disposé sur la branche à poignée des doigts (11), de façon à venir appuyer entre l'index et le médius de la main de préhension, tandis que sa distance par rapport à l'extrémité de la branche à poignée des doigts (11) est comprise de préférence entre environ 70 et environ 95 mm.

11. Cisaille à main selon l'une des revendications précédentes, caractérisée en ce que le coefficient de frottement de la surface de la branche à poignée des doigts (11) est plus faible que le coefficient de frottement de la surface de la branche à poignée de butée (12).

FIG.1

FIG. 2

FIG. 3

FIG. 4

FIG.5

FIG.6